# EUROPEAN PATENT APPLICATION

(11) **EP 4 668 096 A1**
(43) Date of publication of application: **24.12.2025**
(21) Application number: 24769723.8
(22) Date of filing: 22.02.2024
(51) Int. Cl.: G06F 3/16

(54) **AUDIO CONTROL METHOD, AND DEVICE AND MEDIUM**

(30) Priority: 10.03.2023 CN 202310268995
(71) Applicant: Huawei Technologies Co., Ltd., Shenzhen, Guangdong 518129 (CN)
(72) Inventor: WU, Xiaoyan, Shenzhen, Guangdong 518129 (CN)
(74) Representative: Körber, Martin Hans
(86) International application number: PCT/CN2024/078089
(87) International publication number: WO 2024/188028

(57) **Abstract**

This application relates to the field of media playing technologies, and discloses an audio control method, a device, and a medium. The audio control method in this application includes: a first sound pickup unit of a first electronic device being in an active state, the first electronic device collects audio data by using a second sound pickup unit of a second electronic device; and the first electronic device detects that the first sound pickup unit has changed from the active state to an inactive state, and the first electronic device stops collecting audio data by using the second sound pickup unit of the second electronic device. Based on the foregoing solution, the following problem can be effectively avoided: An application of the first electronic device occupies the sound pickup unit of the second electronic device for a long time in a process of collaboration between the first electronic device and the second electronic device, affecting use of the sound pickup unit by an application of the second electronic device. This ensures that an application of the second electronic device or an application of another electronic device or the like can use the sound pickup unit of the second electronic device when the first electronic device does not need to use the sound pickup unit.

## Description

This application claims priority to Chinese Patent Application No. 202310268995.9, filed with the China National Intellectual Property Administration on March 10, 2023 and entitled "AUDIO CONTROL METHOD, DEVICE, AND MEDIUM", which is incorporated herein by reference in its entirety.

### TECHNICAL FIELD

This application relates to the field of media playing technologies, and in particular, to an audio control method, a device, and a medium.

### BACKGROUND

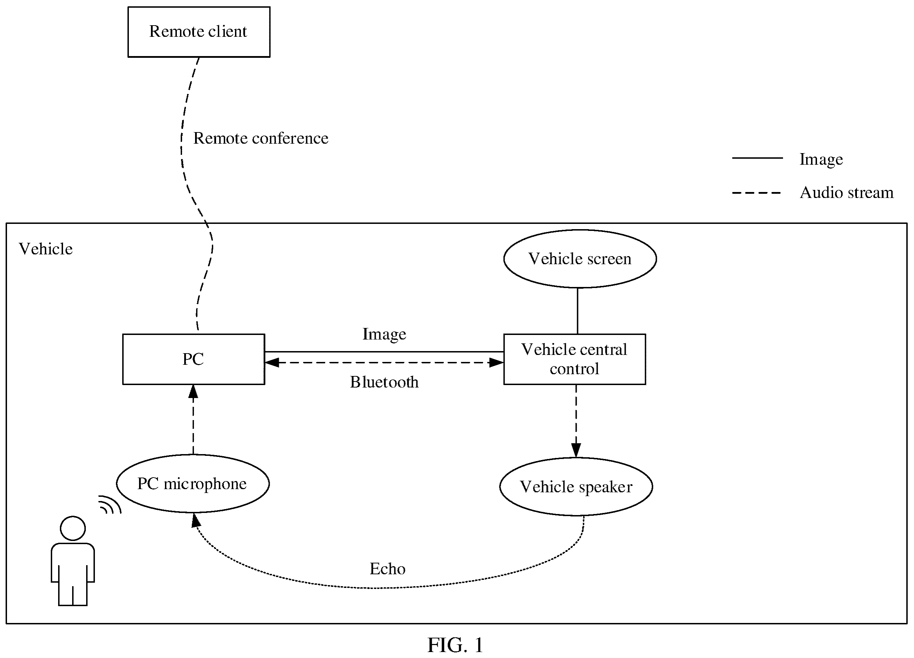

Currently, some users choose to work in vehicles for reasons such as working outdoors or experiencing temporary power outage. As shown in FIG. 1, once a collaborative connection is established between a user's personal computer (personal computer, PC) and a central control of a vehicle, the user initiates remote conferencing with a remote client via the PC within the vehicle, the PC may send obtained images and/or audio streams to the central control of the vehicle via Bluetooth, the central control of the vehicle controls a screen of the vehicle to display the obtained images and controls a vehicle speaker to make sounding, and a PC microphone (microphone, MIC) performs sound pickup. However, due to the confined nature of the vehicle, echoes are obvious, and the PC microphone records both the echoed sound from the vehicle speaker and the speech of occupants in the vehicle, leading to audible echoes perceived by the remote client.

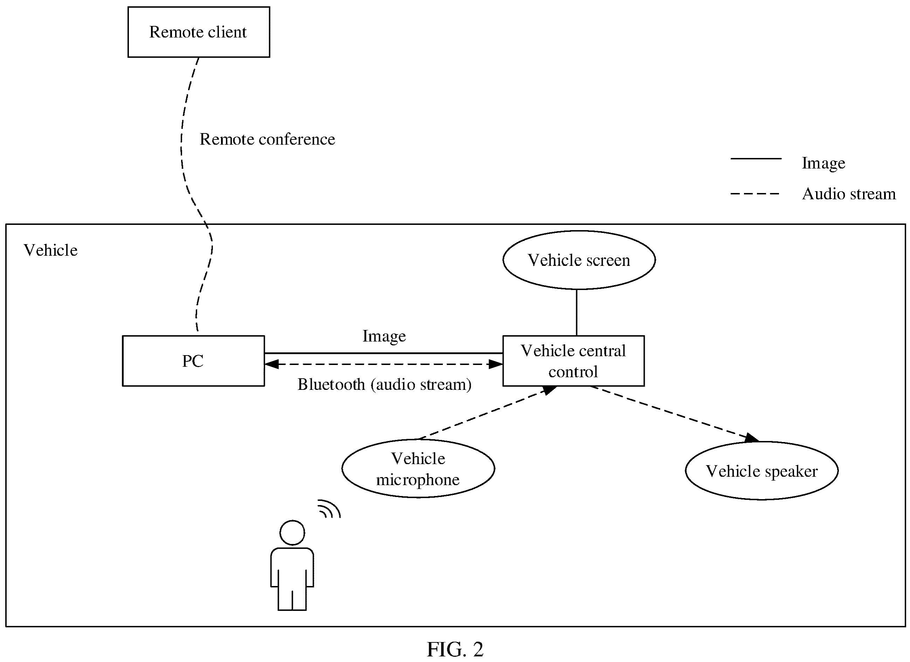

In some solutions, as shown in FIG. 2, upon receiving the audio streams sent by the remote client, the PC transfers the audio stream to the central control of the vehicle via Bluetooth. The central control of the vehicle controls the vehicle speaker to play the audio stream, and controls a vehicle MIC for sound pickup. It can be understood that, based on conventional audio technologies, the issue of echoes in the sound pickup process can be avoided when playing and sound pickup are performed via a same device. However, in the current solutions, because the PC uses a Windows (Windows) operating system, which does not have an audio focus management function, it cannot be ensured that a PC-based application (for example, a communication application) has continuous occupancy for using a MIC of a collaborative device in a use process. For example, if there is any other application requiring access to the MIC while the PC-based application is currently using the MIC, the MIC could be abruptly preempted by the other application, disrupting the ongoing sound pickup of the application that is currently using the MIC. Therefore, to avoid such interruption of sound pickup of the application that is using the MIC, in the solution shown in FIG. 2, after the PC establishes collaboration with an in-vehicle electronic device, the PC perpetually occupies the vehicle MIC throughout the collaboration period to maintain uninterrupted sound pickup. As a result, even if no PC-based applications necessitates the MIC, applications of the vehicle cannot use the vehicle MIC.

### SUMMARY

To resolve the foregoing problem where a PC running a Windows operating system continuously occupies a sound pickup unit of an in-vehicle electronic device on a collaboration side when no sound pickup is needed, thereby preventing applications of the in-vehicle electronic device itself or other electronic devices from using the sound pickup unit of the in-vehicle electronic device, embodiments of this application provide an audio control method, a device, and a medium.

According to a first aspect, an embodiment of this application provides an audio control method. The audio control method includes: a first sound pickup unit of a first electronic device being in an active state, the first electronic device collects audio data by using a second sound pickup unit of a second electronic device; and the first electronic device detects that the first sound pickup unit has changed from the active state to an inactive state, and the first electronic device stops collecting audio data by using the second sound pickup unit of the second electronic device.

It can be understood that, the first electronic device may be an electronic device using a Windows system, for example, a PC. The second electronic device may be any one of terminal devices such as a PC, a tablet computer, a mobile phone, a foldable electronic device, and a cellular phone. The first sound pickup unit and the second sound pickup unit may be apparatuses having a sound pickup function, such as MICs.

Based on the foregoing solution, the following problem can be effectively avoided: An application of the first electronic device occupies the sound pickup unit of the second electronic device (or referred to as occupying a sound pickup focus of the sound pickup unit of the second electronic device) for a long time in a process of collaboration between the first electronic device and the second electronic device, affecting use of the sound pickup unit by an application of the second electronic device. This ensures that an application of the second electronic device or an application of another electronic device or the like can use the sound pickup unit of the second electronic device when the first electronic device does not need to use the sound pickup unit.

In a possible implementation, that the first electronic device detects that the first sound pickup unit has changed from the active state to the inactive state includes: The first electronic device receives a status change notification of the first sound pickup unit; the first electronic device determines whether there is an application that is using the first sound pickup unit; and when determining that there is no application that is using the first sound pickup unit, the first electronic device determines that the first sound pickup unit has changed from the active state to the inactive state.

In a possible implementation, that the first electronic device determines whether there is an application that is using the first sound pickup unit includes: The first electronic device obtains a list of applications that have registered to use the first sound pickup unit; and the first electronic device determines whether there is an application that is using the first sound pickup unit in the application list.

In a possible implementation, that the first electronic device stops collecting audio data by using the second sound pickup unit of the second electronic device includes: The first electronic device sends a sound pickup unit release instruction to the second electronic device; and the second sound pickup unit stops, based on the sound pickup unit release instruction, collecting audio data.

It can be understood that, the first electronic device sends the sound pickup unit release instruction to the second electronic device, so that the first electronic device no longer occupies the second sound pickup unit of the second electronic device.

In a possible implementation, the method further includes: The first electronic device detects that the first sound pickup unit has changed from the inactive state to the active state, and the first electronic device collects audio data by using the second sound pickup unit of the second electronic device.

In a possible implementation, that the first electronic device collects audio data by using the second sound pickup unit of the second electronic device includes: The first electronic device sends a sound pickup unit occupation instruction to the second electronic device; and the second sound pickup unit collects audio data based on the sound pickup unit occupation instruction.

It can be understood that, the first electronic device sends the sound pickup unit occupation instruction to the second electronic device, so that the first electronic device occupies the second sound pickup unit of the second electronic device.

In a possible implementation, the method further includes: The first electronic device detects a user's instruction for selecting a second playing unit of the second electronic device to play audio data, and mutes a first playing unit of the first electronic device; and the first electronic device plays audio data by using the second playing unit.

In some embodiments, the first playing unit may be an apparatus having a sound playing function, such as a speaker. When the first electronic device receives the user's instruction for selecting the second electronic device to play audio data, for example, when the user inputs an instruction on a screen of the first electronic device to instruct the second electronic device to play a to-be-played audio stream, the first electronic device obtains the to-be-played audio stream, mutes a speaker (speaker) of the first electronic device, and sends the to-be-played audio stream and a sound pickup unit occupation instruction to the second electronic device, to make a sound by using a speaker of the second electronic device and perform sound pickup by using the sound pickup unit of the second electronic device. In embodiments of this application, a same terminal is used for audio stream playing and audio stream collection, thereby avoiding a problem of echoes in an audio stream collection process.

In a possible implementation, the method further includes: After a first application of the first electronic device is started, the first application obtains an initial status of the first sound pickup unit; and the first application detects that the initial status is the inactive state, and the first electronic device stops collecting audio data by using the second sound pickup unit of the second electronic device.

In a possible implementation, an operating system of the first electronic device is a Windows operating system.

In a possible implementation, the second electronic device is an in-vehicle electronic device.

According to a second aspect, an embodiment of this application provides an electronic device including: a memory, configured to store instructions to be executed by one or more processors of the electronic device; and a processor, which is one of the one or more processors of the electronic device and configured to implement any one of the audio control methods provided in the first aspect and the possible implementations of the first aspect.

According to a third aspect, an embodiment of this application provides a readable medium, where instructions are stored on the readable medium; and when the instructions are executed on an electronic device, the electronic device is enabled to implement any one of the audio control methods provided in the first aspect and the possible implementations of the first aspect.

### BRIEF DESCRIPTION OF DRAWINGS

FIG. 1 is a diagram of a collaboration scenario of an audio control method;
FIG. 2 is a diagram of a collaboration scenario of an audio control method;
FIG. 3 is a diagram of a structure of a PC according to an embodiment of this application;
FIG. 4 is a diagram of a software structure of an in-vehicle electronic device according to an embodiment of this application;
FIG. 5 is a diagram of a system architecture for collaboration between a PC and an in-vehicle electronic device according to an embodiment of this application;
FIG. 6 is an architectural diagram of a PC manager according to an embodiment of this application;
FIG. 7 is an architectural diagram of a collaboration assistant according to an embodiment of this application;
FIG. 8 is an interaction diagram of an audio control method according to an embodiment of this application;
FIG. 9 is a schematic flowchart of an audio control method according to an embodiment of this application; and
FIG. 10a-1 to FIG. 10b-2 are interaction diagrams of an audio control method according to an embodiment of this application.

### DESCRIPTION OF EMBODIMENTS

Currently, a Windows operating system has no audio focus management function. Therefore, when a PC using the Windows operating system does not need to perform sound pickup, the PC still keeps occupying a sound pickup unit of an in-vehicle electronic device on a collaboration side. As a result, an application of the in-vehicle electronic device or another electronic device cannot use the sound pickup unit of the in-vehicle electronic device.

To resolve the foregoing problem, an embodiment of this application provides an audio control method, which may be applied to any two electronic devices capable of sound pickup collaboration. In the method, a status of activation of a sound pickup unit of a first electronic device may be detected in real time to determine whether to occupy a sound pickup unit of a second electronic device (where the sound pickup unit may be any apparatus that can implement sound pickup, for example, a MIC), thereby avoiding the following problem: The first electronic device continuously occupies the sound pickup unit of the second electronic device and consequently an application of the second electronic device cannot use the sound pickup unit. For example, when detecting that the sound pickup unit of the first electronic device has changed from an inactive state to an active state, the first electronic device sends a sound pickup unit occupation instruction to the second electronic device, to perform sound pickup by using the sound pickup unit of the second electronic device; or when the first electronic device detects that the sound pickup unit of the first electronic device has changed from an active state to an inactive state, that is, when a current status of the sound pickup unit of the first electronic device is the inactive state, the first electronic device sends a sound pickup unit release instruction to the second electronic device, to release the sound pickup unit of the second electronic device occupied by the first electronic device, allowing other applications of the second electronic device to use the sound pickup unit of the second electronic device.

It can be understood that, when the sound pickup unit of the first electronic device is in the active state, it indicates that an application that has activated the sound pickup unit needs to occupy a sound pickup focus of the sound pickup unit of the second electronic device, to perform sound pickup by using the sound pickup unit of the second electronic device; or when the sound pickup unit of the first electronic device is in the inactive state, it indicates that a sound pickup focus of the sound pickup unit of the second electronic device does not need to be occupied.

Based on the foregoing solution, the following problem can be effectively avoided: An application of the first electronic device occupies the sound pickup unit of the second electronic device (or referred to as occupying a sound pickup focus of the sound pickup unit of the second electronic device) for a long time in a process of collaboration between the first electronic device and the second electronic device, affecting use of the sound pickup unit by an application of the second electronic device. This ensures that an application of the second electronic device or an application of another electronic device or the like can use the sound pickup unit of the second electronic device when the first electronic device does not need to use the sound pickup unit. In addition, in embodiments of this application, a same terminal is used for audio stream playing and audio stream collection, thereby avoiding a problem of echoes in an audio stream collection process.

First, the following describes the electronic devices in embodiments of this application.

In embodiments of this application, the first electronic device may be the foregoing electronic device using a Windows system, for example, a PC. It can be implemented that, the first electronic device may be any one of terminal devices such as a tablet computer, a mobile phone, a foldable electronic device, a cellular phone, a personal digital assistant (personal digital assistant, PDA), an artificial intelligence (artificial intelligence, AI) device, a wearable device, and an in-vehicle electronic device. The second electronic device may be any one of terminal devices such as a PC, a tablet computer, a mobile phone, a foldable electronic device, a cellular phone, a PDA, an AI device, a wearable device, and an in-vehicle electronic device.

The following describes hardware structures of the first electronic device and the second electronic device by using an example in which the first electronic device is a PC 10 and the second electronic device is an in-vehicle electronic device 20.

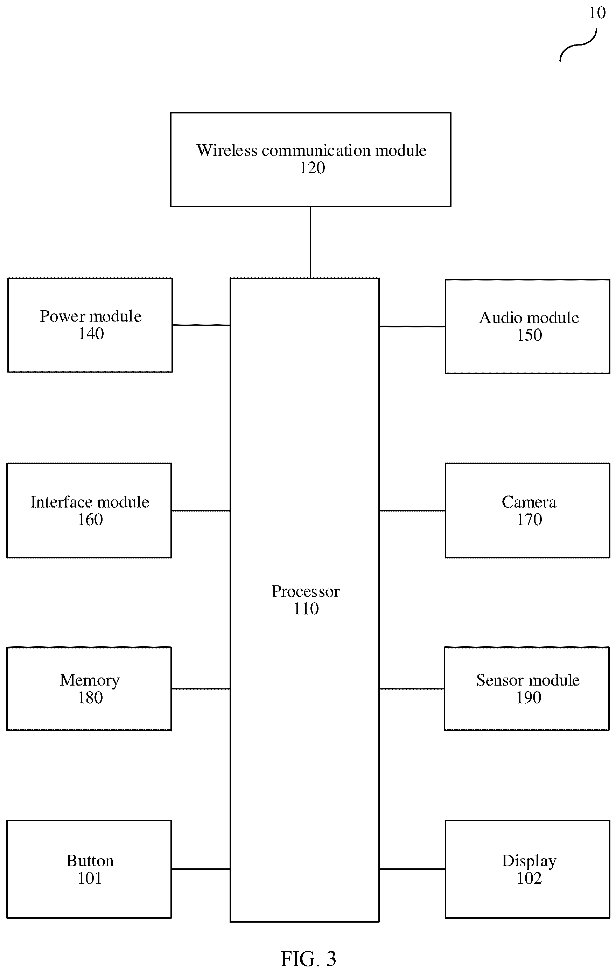

As shown in FIG. 3, the PC 10 may include a processor 110, a power module 140, a memory 180, a mobile communication module 130, a wireless communication module 120, a sensor module 190, an audio module 150, a camera 170, an interface module 160, a button 101, a display 102, and the like.

It can be understood that, the structure shown in embodiments of the present invention does not constitute a specific limitation on the PC 10. In some other embodiments of this application, the PC 10 may include more or fewer components than those shown in the figure, or some components may be combined, or some components may be divided, or different component arrangements may be used. The components shown in the figure may be implemented by hardware, software, or a combination of software and hardware.

The processor 110 may include one or more processing units, for example, may include a processing module or a processing circuit such as a central processing unit (central processing unit, CPU), a graphics processing unit (graphics processing unit, GPU), a digital signal processor (digital signal processing, DSP), a microprocessor (micro-programmed control unit, MCU), an artificial intelligence (artificial intelligence, AI) processor, or a programmable logic device (field programmable gate array, FPGA). Different processing units may be independent components, or may be integrated into one or more processors. A storage unit may be disposed in the processor 110, and is configured to store instructions and data. In some embodiments, the storage unit in the processor 110 is a cache.

It can be understood that, the audio control method in embodiments of this application may be performed by a processor 110 of a corresponding electronic device. The power module 140 may include a power supply, a power management component, and the like. The power supply may be a battery. The power management component is configured to manage charging of the power supply and power supplying of the power supply to the other modules. In some embodiments, the power management component includes a charging management module and a power management module. The charging management module is configured to receive a charging input from a charger. The power management module is configured to connect to the power supply, the charging management module, and the processor 110. The power management module receives an input from the power supply and/or the charging management module, and supplies power to the processor 110, the display 102, the camera 170, the wireless communication module 120, and the like.

The wireless communication module 120 may include an antenna, and receive and send an electromagnetic wave via the antenna. The wireless communication module 120 may provide a wireless communication solution that is applied to the PC 10 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The PC 10 may communicate with a network and another device by using a wireless communication technology.

The display 102 is configured to display a human-computer interaction interface, an image, a video, and the like. The display 102 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a quantum dot light emitting diode (quantum dot light emitting diode, QLED), or the like.

The sensor module 190 may include an optical proximity sensor, a pressure sensor, a temperature sensor, a touch sensor, an ambient light sensor, and the like.

The audio module 150 is configured to convert digital audio information into an analog audio signal for output, or convert analog audio input into a digital audio signal. The audio module 150 may be further configured to encode and decode an audio signal. In some embodiments, the audio module 150 may be disposed in the processor 110, or some function modules of the audio module 150 are disposed in the processor 110. In some embodiments, the audio module 150 may include a speaker, a receiver, a MIC, and a headset jack.

The camera 170 is configured to capture a static image or a video. An optical image is generated for an object through a lens, and is projected onto a photosensitive element. The photosensitive element converts an optical signal into an electrical signal, and then transfers the electrical signal to an image signal processor (image signal processing, ISP). The image signal processor converts the electrical signal into a digital image signal. The PC 10 may implement a photographing function by using an ISP, the camera 170, a video codec, a graphics processing unit (graphics processing unit, GPU), the display 102, an application processor, and the like.

The interface module 160 includes an external memory interface, a USB interface, a subscriber identity module (subscriber identification module, SIM) card interface, and the like. The external memory interface may be configured to connect to an external memory card, for example, a micro SD card, to expand a storage capability of the PC 10. The external memory card communicates with the processor 110 via the external memory interface, to implement a data storage function. A universal serial bus interface is configured for communication between the PC 10 and another electronic device. The subscriber identity module card interface is configured to communicate with a SIM card installed in the PC 10, for example, read a phone number stored in the SIM card, or write a phone number into the SIM card.

In some embodiments, the PC 10 further includes a button 101 indicator, and the like. The button 101 may include a volume button, a power-on/power-off button, and the like. The indicator may include a laser indicator, a radio frequency indicator, an LED indicator, and the like.

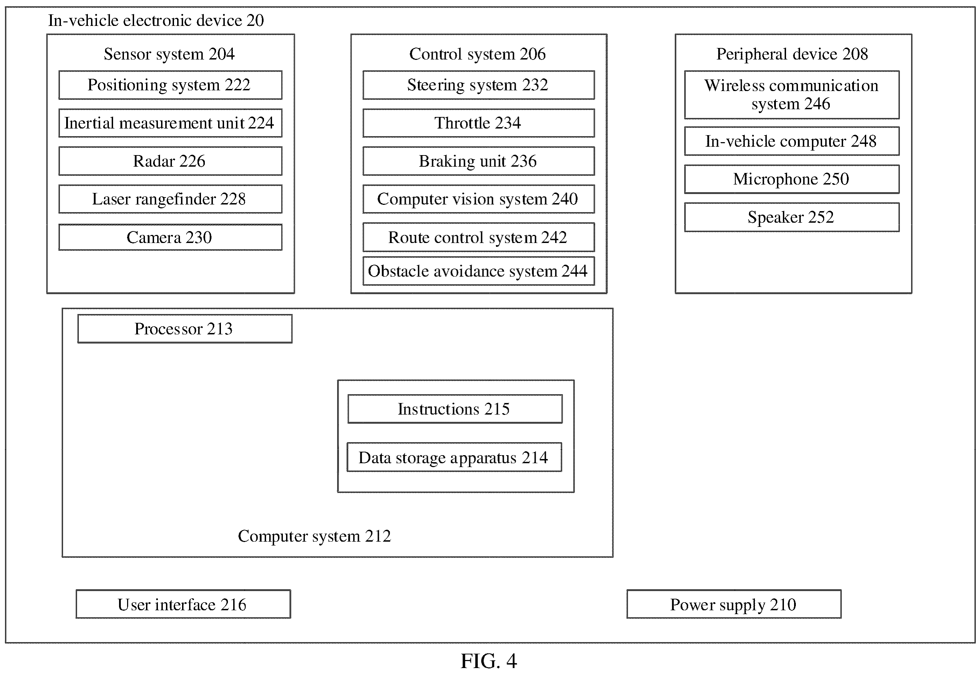

FIG. 4 is a diagram of a hardware structure of an in-vehicle electronic device according to an embodiment of this application. A schematic structure of the in-vehicle electronic device 20 may be shown in FIG. 4.

The in-vehicle electronic device 20 may include a sensor system 204, a control system 206, one or more peripheral devices 208, a power supply 210, a computer system 212, and a user interface 216. Optionally, the in-vehicle electronic device 20 may include more or fewer subsystems, and each subsystem may include a plurality of elements. In addition, each subsystem and each element of the in-vehicle electronic device 20 may be interconnected in a wired or wireless manner.

The sensor system 204 may include several sensors to sense information about an ambient environment of a vehicle. For example, the sensor system 204 may include a positioning system 222 (where the positioning system 222 may be a global positioning system (global positioning system, GPS), or may be a BeiDou system or another positioning system), an inertial measurement unit (inertial measurement unit, IMU) 224, a radar 226, a laser rangefinder 228, and a camera 230. The sensor system 204 may further include a sensor (for example, an in-vehicle air quality monitor, a fuel gauge, or an engine oil temperature gauge) in an internal system of the monitored in-vehicle electronic device 20. Sensor data from one or more of these sensors may be used to detect an object and corresponding features (a position, a shape, a direction, a speed, and the like) of the object. Such detection and identification are key functions for a secure operation of the in-vehicle electronic device 20.

The positioning system 222 may be configured to estimate a geographical location of the vehicle.

The IMU 224 is configured to sense a location change and an orientation change of the vehicle based on an inertial acceleration. In an embodiment, the IMU 224 may be a combination of an accelerometer and a gyroscope. For example, the IMU 224 may be configured to measure a curvature of the in-vehicle electronic device 20.

The radar 226 may sense an object in the ambient environment of the intelligent in-vehicle electronic device 20 by using a radio signal. In some embodiments, the radar 226 may be further configured to sense a speed and/or a moving direction of an object, in addition to sensing the object.

The laser rangefinder 228 may sense an object in the environment in which the vehicle is located by using laser. In some embodiments, the laser rangefinder 228 may include one or more laser sources, a laser scanner, one or more detectors, and another system component.

The camera 230 may be configured to capture a plurality of images of an ambient environment of the in-vehicle electronic device. The camera 230 may be a static camera or a video camera.

The control system 206 may have various elements, including a steering system 232, a throttle 234, a braking unit 236, a computer vision system 240, a route control system 242, and an obstacle avoidance system 244.

The steering system 232 may operate to adjust a moving direction of the vehicle. For example, in an embodiment, the steering system 232 may be a steering wheel system, and may be configured for a rotation angle of a steering wheel.

The throttle 234 may be configured to control an operating speed of an engine and further control a speed of the vehicle.

The braking unit 236 is configured to control the vehicle to decelerate. The braking unit 236 may slow down the wheels through friction. In another embodiment, the braking unit 236 may convert kinetic energy of the wheels into a current. Alternatively, the braking unit 236 may reduce, in another manner, a rotation speed of the wheels to control the speed of the vehicle.

The computer vision system 240 may operate to process and analyze the image captured by the camera 230, to recognize an object and/or a feature in the ambient environment of the vehicle. The object and/or the feature may include a traffic signal, a road boundary, and an obstacle. The computer vision system 240 may use an object recognition algorithm, a structure from motion (structure from motion, SFM) algorithm, video tracking, and another computer vision technology. In some embodiments, the computer vision system 240 may be configured to draw a map for the environment, track an object, estimate a speed of an object, and the like.

The route control system 242 is configured to determine a traveling route for the vehicle. In some embodiments, the route control system 242 may combine data from the sensor system 204, the positioning system 222, and one or more predetermined maps to determine the traveling route of the vehicle.

The obstacle avoidance system 244 is configured to recognize, evaluate, and avoid or otherwise bypass a potential obstacle in the environment of the vehicle.

Certainly, in an example, the control system 206 may additionally or alternatively include components other than those shown and described. Alternatively, some of the foregoing shown components may be reduced.

The vehicle interacts with an external sensor, another vehicle, another computer system, or a user by using the peripheral device 208. The peripheral device 208 may include a wireless communication system 246, an in-vehicle computer 248, a microphone 250, and/or a speaker 252.

In some embodiments, the peripheral device 208 provides a means for a user of the vehicle to interact with the user interface 216. For example, the in-vehicle computer 248 may provide information for the user of the vehicle. The user interface 216 may further operate the in-vehicle computer 248 to receive an input of the user. The in-vehicle computer 248 may be operated by using a touchscreen. In other cases, the peripheral device 208 may provide a means for the vehicle to communicate with another device located in the vehicle. For example, the microphone 250 may receive audio (for example, a voice command or another audio input) from the user of the vehicle. Similarly, the speaker 252 may output audio to the user of the intelligent vehicle.

The wireless communication system 246 may communicate, in a wireless manner, with one or more devices directly or through a communication network. For example, the wireless communication system 246 may use 3G cellular communication such as CDMA, EVD0, or GSM/GPRS, 4G cellular communication such as LTE, or 5G cellular communication. The wireless communication system 246 may communicate with a wireless local area network (wireless local area network, WLAN) via Wi-Fi. In some embodiments, the wireless communication system 246 may directly communicate with a device via an infrared link or Bluetooth, or may use other wireless protocols, for example, various vehicle communication systems. For example, the wireless communication system 246 may include one or more dedicated short-range communications (dedicated short-range communications, DSRC) devices, and the devices may include public and/or private data communication between vehicles and/or roadside stations.

The power supply 210 may supply power to the components of the vehicle. In an embodiment, the power supply 210 may be a rechargeable lithium-ion or lead-acid battery. One or more battery strings of the battery may be configured as a power supply to supply power to the components of the vehicle.

Some or all functions of the vehicle are controlled by the computer system 212. The computer system 212 may include at least one processor 213. The processor 213 executes instructions 215 stored in a non-transient computer-readable medium such as a data storage apparatus 214. The computer system 212 may further control a plurality of computing devices in an individual component or subsystem of the vehicle in a distributed manner.

The processor 213 may be any conventional processor, such as a commercially available central processing unit (central processing unit, CPU). Alternatively, the processor may be a dedicated device such as an application-specific integrated circuit (application-specific integrated circuit, ASIC) or another hardware-based processor. Although FIG. 4 functionally illustrates the processor, the memory, and another element of a computer in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from the housing of the computer. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and communicate with the vehicle in a wireless manner. In another aspect, some processes described herein are performed on a processor disposed inside the vehicle, and other processes are performed by a remote processor, including performing a step needed for single manipulation.

In some embodiments, the data storage apparatus 214 may include the instructions 215 (for example, program logic), and the instructions 215 may be executed by the processor 213 to perform various functions of the vehicle, including the foregoing described functions. The data storage apparatus 224 may further include additional instructions, including an instruction for sending data to, receiving data from, interacting with, and/or controlling one or more of the sensor system 204, the control system 206, and the peripheral device 208.

The data storage apparatus 214 may further store data in addition to the instructions 215, for example, a road map, route information, a location of the vehicle, a direction of the vehicle, a speed of the vehicle, other vehicle data of the vehicle, and other information. Such information may be used by the vehicle and the computer system 212 when the vehicle operates in an autonomous mode, a semi-autonomous mode, and/or a manual mode.

The user interface 216 is configured to provide information for or receive information from the user of the vehicle. Optionally, the user interface 216 may include one or more input/output devices within a set of peripheral devices 208, such as the wireless communication system 246, the in-vehicle computer 248, the microphone 250, and the speaker 252.

The computer system 212 may control the functions of the vehicle based on inputs received from various subsystems (for example, the sensor system 204 and the control system 206) and the user interface 216. For example, the computer system 212 may control, by using an input from the control system 206, the steering system 232 to avoid obstacles detected by the sensor system 204 and the obstacle avoidance system 244. In some embodiments, the computer system 212 may be operated to control the vehicle and subsystems of the vehicle in many aspects.

Optionally, one or more of the foregoing components may be separately installed or associated with the in-vehicle electronic device 20. For example, the data storage apparatus 214 may partially or completely be separated from the in-vehicle electronic device 20. The foregoing components may be communicatively coupled together in a wired and/or wireless manner.

Optionally, the foregoing components are merely examples. During actual application, the components in the foregoing modules may be added or removed based on an actual requirement. FIG. 4 should not be understood as any limitation on embodiments of this application.

The following describes software structures of the first electronic device and the second electronic device by using an example in which the first electronic device is a PC and the second electronic device is an in-vehicle electronic device. In some embodiments, the PC may be a Windows operating system, and a sound pickup unit in the PC may be a MIC.

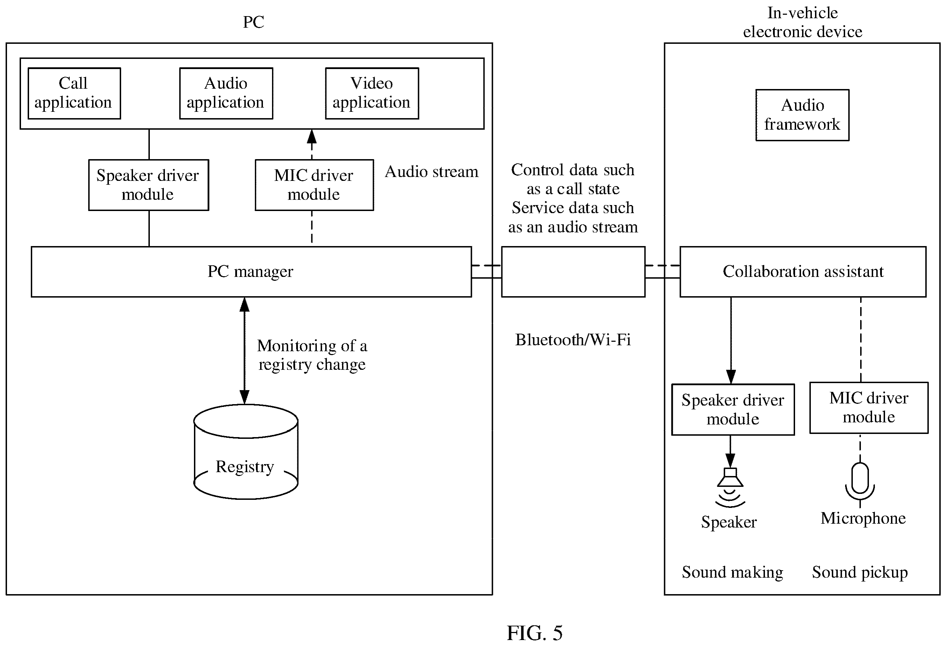

As shown in FIG. 5, the PC may include: upper-layer applications that need to use a MIC, such as a call application, an audio application, and a video application; a PC manager; a registry; a speaker driver module; a MIC driver module; and the like.

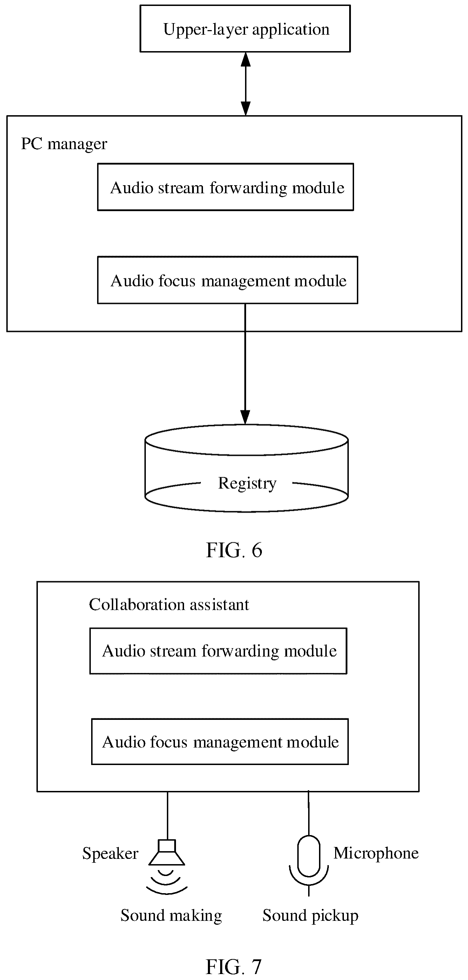

As shown in FIG. 6, the PC manager includes an audio stream forwarding module and an audio focus management module.

In this embodiment of this application, the audio stream forwarding module of the PC may be used to perform serialization or deserialization processing on an obtained audio stream. Serialization means that, after receiving an audio stream sent by an upper-layer application, the audio stream forwarding module can serialize the audio stream into a sound byte stream. Then the sound byte stream is sent to the second electronic device (for example, an electronic device such as an in-vehicle electronic device or a tablet) via Wireless Fidelity (wireless fidelity, Wi-Fi) or Bluetooth, so that the sound byte stream is played by using a speaker of the second electronic device. Deserialization means that, after obtaining a sound byte stream from the second electronic device (for example, an electronic device such as an in-vehicle electronic device or a tablet), the audio stream forwarding module can deserialize the sound byte stream into an audio stream. Then the audio stream after the deserialization processing is sent to an upper-layer application.

In this embodiment of this application, the audio focus management module of the PC may be used to monitor the registry and obtain a current status of a MIC recorded in the registry, generate a corresponding MIC control instruction based on the current status of the MIC, and send the MIC control instruction to the second electronic device. Specifically, if the MIC is in the active state, a MIC occupation instruction is sent to the second electronic device, so that the second electronic device occupies a MIC sound pickup focus; or if the MIC is in the inactive state, a MIC release instruction is sent to the second electronic device, so that the second electronic device releases a MIC sound pickup focus. In some embodiments, the MIC control instruction may carry control data, for example, a call status.

In this embodiment of this application, the registry may be used to record the status of activation of the MIC; and the PC manager may monitor the registry, and send the MIC control instruction to the in-vehicle electronic device based on information recorded in the registry.

In this embodiment of this application, the speaker driver module of the PC may be used to drive a speaker to play an audio stream.

In this embodiment of this application, the MIC driver module of the PC may be used to drive a MIC to perform sound pickup.

In this embodiment of this application, the in-vehicle electronic device may include a collaboration assistant, a speaker driver module, a MIC driver module, an audio framework, a speaker, and a MIC. The collaboration assistant may be used to release or occupy a MIC audio focus of the in-vehicle electronic device based on the MIC control instruction sent by the PC manager, for example, release or occupy the MIC sound pickup focus. As shown in FIG. 7, the collaboration assistant includes an audio stream forwarding module and an audio focus management module.

In this embodiment of this application, the audio stream forwarding module of the in-vehicle electronic device may be used to send an audio stream that is obtained via Wi-Fi or Bluetooth to the speaker driver module, to drive the speaker by using the speaker driver module to make a sound; may send an audio stream collected by the MIC to the PC manager; and may perform serialization processing on the collected audio stream. Serialization means that, after the MIC collects the audio stream, serialization processing is performed on the audio stream to obtain a sound byte stream. Then the sound byte stream is sent to the PC manager via Wi-Fi or Bluetooth.

In this embodiment of this application, the audio focus management module of the in-vehicle electronic device may be used to control, based on the MIC control instruction sent by the PC manager, the MIC driver module to occupy or release the MIC sound pickup focus. Specifically, if the audio focus management module receives the MIC occupation instruction, the audio focus management module controls the MIC driver module to occupy the MIC sound pickup focus, to activate the MIC to start sound pickup; or if the audio focus management module receives the MIC release instruction, the audio focus management module controls the MIC driver module to release the MIC sound pickup focus. The audio focus management module may send the MIC control instruction to the audio framework, for the audio framework to distribute the MIC control instruction to the MIC driver module.

In this embodiment of this application, the speaker driver module of the in-vehicle electronic device may be used to drive the speaker to play an audio stream. The MIC driver module may be used to drive the MIC to perform sound pickup.

In this embodiment of this application, the audio framework of the in-vehicle electronic device may be used to receive the MIC control instruction sent by the audio focus management module of the collaboration assistant, and distribute the MIC control instruction to the MIC driver module.

The following briefly describes a process of interaction between the PC and the in-vehicle electronic device.

In some embodiments, as shown in FIG. 5, the PC manager may monitor a change in the registry; and when detecting that the status of the MIC in the registry has changed, the PC manager obtains a list of applications that have registered to use the MIC in the registry, traverses the list of applications that have registered to use the MIC, queries whether there is an application that is using the MIC in the list of applications that have registered to use the MIC, and if a determining result is yes, determines that a current status of a MIC of the PC is the active state. The PC manager sends the MIC occupation instruction to the collaboration assistant of the in-vehicle electronic device via Bluetooth or Wi-Fi. The collaboration assistant of the in-vehicle electronic device controls, based on the MIC occupation instruction, the MIC of the in-vehicle electronic device to perform sound pickup, and sends a collected audio stream to the PC manager via Bluetooth or Wi-Fi. Then the PC manager sends the collected audio stream to a remote customer. In some embodiments, the MIC control instruction may carry control data, for example, a call status.

If the determining result is no, it is determined that the current status of the MIC of the PC is the inactive state. In this case, the PC manager sends the MIC release instruction to the collaboration assistant of the in-vehicle electronic device via Bluetooth or Wi-Fi, and the collaboration assistant of the in-vehicle electronic device controls, based on the MIC release instruction, the MIC of the in-vehicle electronic device to stop sending collected audio stream to the PC manager.

It can be understood that, in some embodiments, the registry includes the list of applications that use the MIC. The list of applications that use the MIC records applications that use the MIC in the PC and a real-time status of use of the MIC by each application. For example, if an application is currently using the MIC, the PC may determine that the current status of the MIC is the active state; or if no application is currently using the MIC, the PC may determine that the current status of the MIC is the inactive state.

It can be understood that, when a real-time status of use of the MIC by an application in the PC has changed, the PC may detect that the current status of the MIC in the registry has changed. For example, when the applications of the PC that have registered to use the MIC change from absence of all applications that use the MIC to presence of an application that is using the MIC, for example, when a video application starts to use the MIC, the status of the MIC in the application list changes from the inactive state to the active state, that is, the status of the MIC in the registry has changed.

In some embodiments, when it is detected that the current status of the MIC in the registry has changed, for example, when a video application in contact with a remote customer has activated the MIC, the list of applications that use the MIC is obtained and the list of applications that use the MIC is traversed, to query whether an application has activated the MIC.

In some embodiments, before it is detected that the current status of the MIC of the PC has changed, an initial status of the MIC of the PC may be obtained; and if the initial status of the MIC of the PC is the active state, the MIC occupation instruction is sent to the in-vehicle electronic device; or if the initial status of the MIC of the PC is the inactive state, the MIC release instruction is sent to the in-vehicle electronic device.

In some embodiments, when the PC receives a user's instruction for selecting the in-vehicle electronic device to make a sound, for example, when the user inputs an instruction on a screen of the PC to instruct the in-vehicle electronic device to play a to-be-played audio stream, the PC may mute a speaker (speaker) of the PC and send the to-be-played audio stream to the in-vehicle electronic device, to make the sound by using the speaker of the in-vehicle electronic device and perform sound pickup by using the MIC of the in-vehicle electronic device.

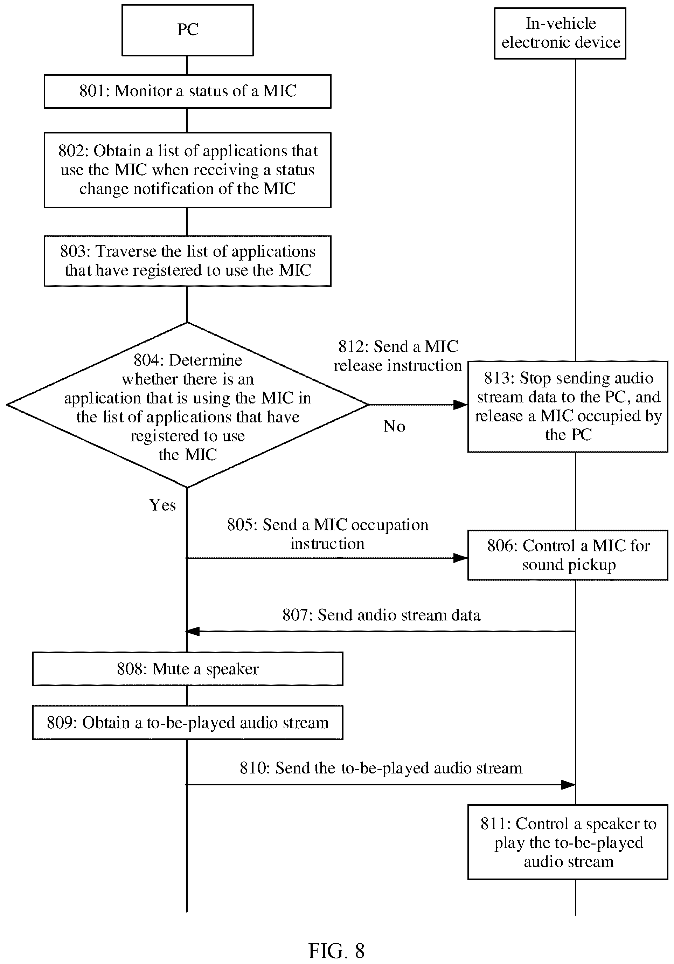

**The following gives a detailed description of the audio control method according to this embodiment of this application by using an example in which the first electronic device is a PC, the second electronic device is an in-vehicle electronic device, and the sound p**i**ckup units are MIC**s. FIG. 8 is an interaction diagram of an audio control method according to an embodiment of this application. The audio control method includes the following steps.

801: APC monitors a status of a MIC.

In this embodiment of this application, after the PC establishes a connection to an in-vehicle electronic device, the PC may monitor a registry by using an audio focus management module in a PC manager to obtain the status of the MIC in the PC, where the registry records a status of use of the MIC.

Specifically, the audio focus management module may invoke an interface (RegOpenKeyEx) for opening a specified registry to open a key (key) of the MIC in the registry, and then invoke an interface (RegNotifyChangeKeyValue) for monitoring a registry entry change to subscribe to a MIC activation status change notification, where path information of a parameter MIC that needs to be used when the audio focus management module invokes the interface (RegOpenKeyEx) for opening the specified registry may be:
"\\SOFTWARE\\MICrosoft\\Windows\\CurrentVersion\\CapabilityAccessManager\\C onsentStore\\MICrophone ".

It can be understood that, when the status of the MIC is an active state, it indicates that an application that has activated the MIC needs to occupy a MIC sound pickup focus of the in-vehicle electronic device, to collect an audio stream by using a MIC of the in-vehicle electronic device; or when the status of the MIC is an inactive state, it indicates that a MIC sound pickup focus does not need to be occupied, that is, a MIC of the in-vehicle electronic device does not need to collect an audio stream.

802: When receiving a status change notification of the MIC, the PC obtains a list of applications that use the MIC.

In this embodiment of this application, the audio focus management module of the PC manager in the PC may invoke a registry key obtaining interface (Registry::GetKeys) to obtain the list of applications that use the MIC.

It can be understood that, when an application in the PC, such as a video application, has activated the MIC, the status of the MIC recorded in the registry is the active state; or when an application in the PC, such as a video application, has switched off the MIC, the status of the MIC recorded in the registry is the inactive state. The PC manager monitors the registry in real time. Therefore, when the status of the MIC recorded in the registry changes from the active state to the inactive state or from the inactive state to the active state, the audio focus management module in the PC manager receives a notification sent by the registry about a status change of the MIC.

803: The PC traverses the list of applications that have registered to use the MIC.

804: The PC determines whether there is an application that is using the MIC in the list of applications that have registered to use the MIC.

If a determining result is yes, step 805 is performed, where the PC sends a MIC occupation instruction to the in-vehicle electronic device; or if a determining result is no, step 812 is performed, where the PC sends a MIC release instruction to the in-vehicle electronic device.

In this embodiment of this application, the audio focus management module in the PC manager may traverse the list of applications that have registered to use the MIC; invoke a registry value obtaining interface (Registry::GetValue) to query whether there is an application that is using the MIC in the application list; and when there is an application that is using the MIC in the application list, determine that a current status of the MIC is the active state; or when there is no any application that is using the MIC in the application list, determine that a current status of the MIC is the inactive state, and then generate a corresponding MIC control instruction based on the current status of activation of the MIC, where the MIC control instruction includes the MIC occupation instruction or the MIC release instruction.

805: The PC sends the MIC occupation instruction to the in-vehicle electronic device.

It can be understood that, in this embodiment of this application, when there is an application that is using the MIC in the application list, it is determined that the current status of the MIC is the active state, and the PC sends the MIC occupation instruction to the in-vehicle electronic device, to implement sound pickup by using the MIC of the in-vehicle electronic device. In this way, the PC occupies the MIC of the in-vehicle electronic device.

In this embodiment of this application, before obtaining the MIC release instruction, the in-vehicle electronic device keeps a MIC pickup occupied state; and after obtaining audio stream data, the in-vehicle electronic device sends the audio stream data to the PC.

806: The in-vehicle electronic device controls the MIC to perform sound pickup.

807: The in-vehicle electronic device sends audio stream data to the PC.

It can be understood that, after receiving the MIC occupation instruction, a collaboration assistant of the in-vehicle electronic device may control the MIC to start sound pickup to obtain audio stream data, perform serialization processing on a collected audio stream to obtain a sound byte stream, and then send the sound byte stream after the serialization to the PC manager of the PC via Wi-Fi or Bluetooth.

In this embodiment of this application, after the PC manager of the PC receives the collected audio stream sent by the in-vehicle electronic device, an audio stream forwarding module of the PC manager may perform deserialization processing on the received collected audio stream, and then send the deserialized audio stream to an upper-layer application.

808: The PC mutes a speaker of the PC.

In some embodiments, when the PC receives a user's instruction for selecting collaborative sound making, for example, when the user inputs an instruction on a screen of the PC to instruct the in-vehicle electronic device to play a to-be-played audio stream, the PC may mute the speaker of the PC, and send the to-be-played audio stream to the in-vehicle electronic device, to play the to-be-played audio stream by using a speaker of the in-vehicle electronic device.

It can be understood that, in this embodiment of this application, after the PC receives the user's instruction for selecting collaborative sound making, a same terminal, that is, the in-vehicle electronic device, is used for audio stream playing and audio stream collection, thereby avoiding a problem of echoes in an audio stream collection process.

809: The PC obtains a to-be-played audio stream.

In this embodiment of this application, when the to-be-played audio stream has been obtained, the PC manager of the PC may serialize the to-be-played audio stream into a sound byte stream by using the audio stream forwarding module of the PC manager.

It can be understood that, the to-be-played audio stream may be an audio stream obtained by an application that has activated the MIC, for example, call data or music sent by a remote device.

810: The PC sends the to-be-played audio stream to the in-vehicle electronic device.

In this embodiment of this application, the PC may send the serialized to-be-played audio stream to the collaboration assistant of the in-vehicle electronic device via Wi-Fi or Bluetooth, to play the serialized to-be-played audio stream by using the speaker of the in-vehicle electronic device and perform sound pickup by using the MIC of the in-vehicle electronic device.

811: The in-vehicle electronic device controls the speaker to play the to-be-played audio stream.

In this embodiment of this application, after receiving the serialized to-be-played audio stream, the collaboration assistant of the in-vehicle electronic device may send the to-be-played audio stream to a speaker driver module by using the audio stream forwarding module of the collaboration assistant, to drive the speaker by using the speaker driver module to play the to-be-played audio stream.

812: The PC sends the MIC release instruction to the in-vehicle electronic device.

In this embodiment of this application, when the PC determines that there is no application that is using the MIC in the list of applications that have registered to use the MIC, the PC may send the MIC release instruction to the in-vehicle electronic device via Wi-Fi or Bluetooth, to release the MIC of the in-vehicle electronic device occupied by the PC, so that an application of the in-vehicle electronic device or an application of another electronic device can use the MIC of the in-vehicle electronic device.

813: The in-vehicle electronic device stops sending audio stream data to the PC, and releases the MIC occupied by the PC.

In this embodiment of this application, upon receipt of the MIC release instruction, the collaboration assistant of the in-vehicle electronic device may release the MIC sound pickup focus. In this case, the PC stops occupying the MIC of the in-vehicle electronic device. For example, the in-vehicle electronic device stops sending audio stream data to the PC, and the in-vehicle electronic device allows another application of the in-vehicle electronic device or another application collaborating with the in-vehicle electronic device to occupy the MIC.

In this embodiment of this application, the current status of the MIC of the PC is monitored in real time, so that the status of occupation of the MIC of the in-vehicle electronic device is controlled in real time based on the current status of the MIC of the PC, thereby avoiding the following problem: An application of the PC occupies the MIC of the in-vehicle electronic device for a long time in a process of collaboration between the PC and the in-vehicle electronic device, affecting use of the MIC by an application of the in-vehicle electronic device. This ensures that an application of the in-vehicle electronic device can use the MIC of the in-vehicle electronic device when the application of the PC does not need to use the MIC of the in-vehicle electronic device.

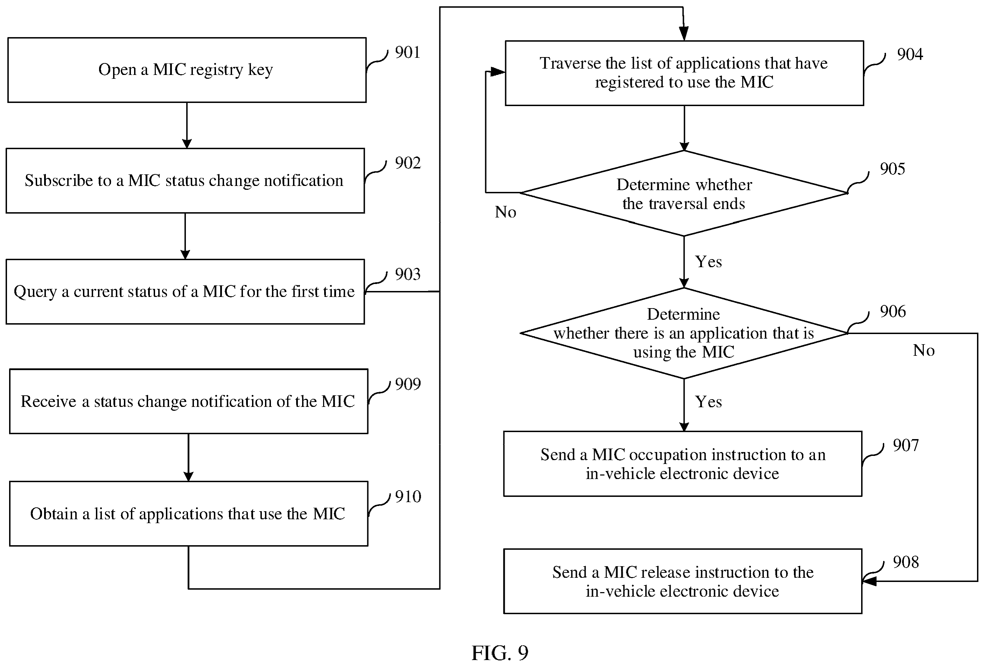

The following describes another audio control method according to an embodiment of this application. Different from FIG. 8, FIG. 9 shows a detailed process in which a first electronic device obtains a status of activation of a MIC based on a registry in an audio control method. As shown in FIG. 9, the audio control method includes the following steps.

901: Open a MIC registry key.

In some embodiments, an audio focus management module in a PC manager may invoke an interface (RegOpenKeyEx) for opening a specified registry to open a key (key) of a MIC in the registry, where path information of a parameter MIC that needs to be used when the interface (RegOpenKeyEx) for opening the specified registry is invoked may be:
"\\SOFTWARE\\MICrosoft\\Windows\\CurrentVersion\\CapabilityAccessManager\\C onsentStore\\MICrophone".

902: Subscribe to a MIC status change notification.

In some embodiments, the audio focus management module in the PC manager may invoke an interface (RegNotifyChangeKeyValue) for monitoring a registry entry change to subscribe to a status change notification of the MIC; and when a status of the MIC has changed, obtain status change information of the MIC.

903: Query a current status of the MIC for the first time.

It can be understood that, in this embodiment of this application, after the PC manager is started, first, the current status of the MIC may be queried and steps 904 to 908 are performed, to send a corresponding MIC control instruction to an in-vehicle electronic device in time.

904: Traverse a list of applications that have registered to use the MIC.

It can be understood that, traversing the list of applications that have registered to use the MIC may be sequentially querying a status of use of the MIC by each application in the list of applications that have registered to use the MIC.

905: Determine whether the traversal ends.

In this embodiment of this application, if a determining result is yes, step 906 is performed to determine whether there is an application that is using the MIC; or if a determining result is no, step 904 is performed to continue to perform the traversal.

906: Determine whether there is an application that is using the MIC.

In this embodiment of this application, if a determining result is yes, step 907 is performed to send a MIC occupation instruction to the in-vehicle electronic device; or if a determining result is no, step 908 is performed to send a MIC release instruction to the in-vehicle electronic device.

In some embodiments, the audio focus management module may invoke a registry value obtaining interface (Registry:: GetValue) to query whether there is an application that is using the MIC in the list of applications that use the MIC; and if a determining result is yes, send the MIC occupation instruction to the in-vehicle electronic device; or if a determining result is no, send the MIC release instruction to the in-vehicle electronic device.

907: Send the MIC occupation instruction to the in-vehicle electronic device.

In some embodiments, the MIC occupation instruction may enable the in-vehicle electronic device to control a MIC to perform sound pickup to obtain audio stream data, and send the obtained audio stream data to a PC.

908: Send the MIC release instruction to the in-vehicle electronic device.

In some embodiments, the MIC release instruction may be used to release a MIC of the in-vehicle electronic device occupied by the PC. For example, when the in-vehicle electronic device receives the MIC release instruction, the in-vehicle electronic device stops sending audio stream data to the PC, and controls the MIC to receive occupancy from another application.

It can be understood that, in this embodiment of this application, after the current status of the MIC is queried for the first time and the MIC control instruction is sent to the in-vehicle electronic device, if a current-status change notification of the MIC is received, steps 909 and 910 and steps 904 to 908 may be performed, to determine the control instruction to be sent to the in-vehicle electronic device, as shown below.

909: Receive a status change notification of the MIC.

It can be understood that, in this embodiment of this application, after the status of the MIC is queried for the first time and the MIC control instruction is sent to the in-vehicle electronic device, if a status change notification of the MIC is received again, step 910 and steps 904 to 908 may be performed, to determine the MIC control instruction to be sent to the in-vehicle electronic device.

910: Obtain the list of applications that use the MIC.

In some embodiments, the audio focus management module may invoke a registry key obtaining interface (Registry::GetKeys) to obtain the list of applications that use the MIC. After the list of applications that use the MIC is obtained, steps 904 to 908 may be performed, to determine the control instruction to be sent to the in-vehicle electronic device. Steps 904 to 908 are described previously, and therefore details are not described herein again.

It can be understood that, the interface (RegOpenKeyEx) for opening the specified registry, the interface (RegNotifyChangeKeyValue) for monitoring a registry entry change, the registry key obtaining interface (Registry::GetKeys), and the registry value obtaining interface (Registry::GetValue) are Windows software development kit (software development kit, SDK) interfaces used to obtain the status of activation of the MIC.

In this embodiment of this application, audio stream playing and audio stream collection are performed by using the in-vehicle electronic device, thereby avoiding a problem of echoes in an audio stream collection process. In addition, the current status of the MIC of the PC is monitored in real time, so that the status of occupation of the MIC of the in-vehicle electronic device is controlled in real time based on the current status of the MIC of the PC, thereby avoiding the following problem: An application of the PC occupies the MIC of the in-vehicle electronic device for a long time in a process of collaboration between the PC and the in-vehicle electronic device, affecting use of the MIC by an application of the in-vehicle electronic device. This ensures that an application of the in-vehicle electronic device can use the MIC of the in-vehicle electronic device when the application of the PC does not need to use the MIC of the in-vehicle electronic device.

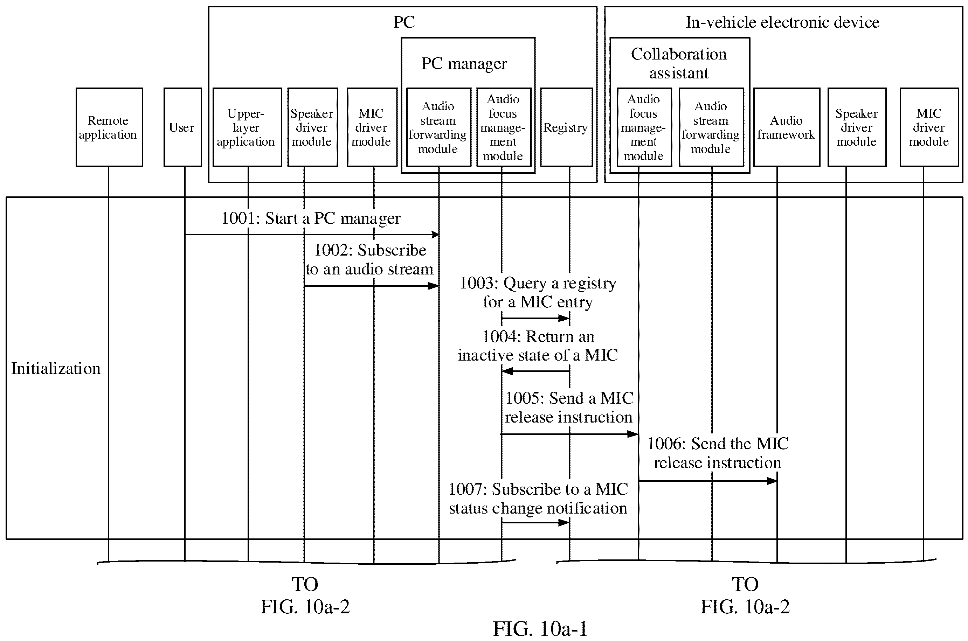

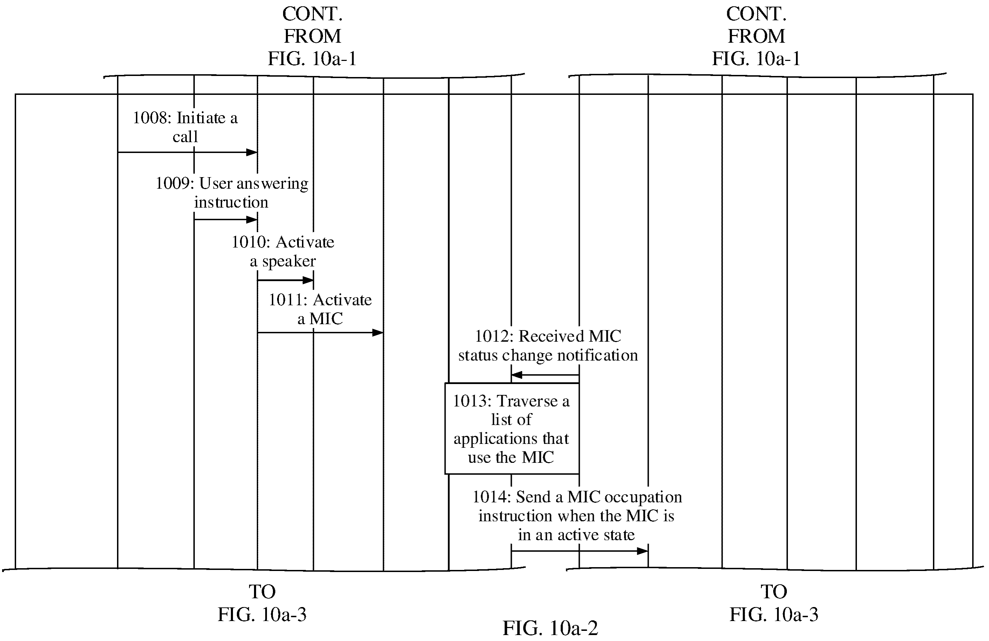

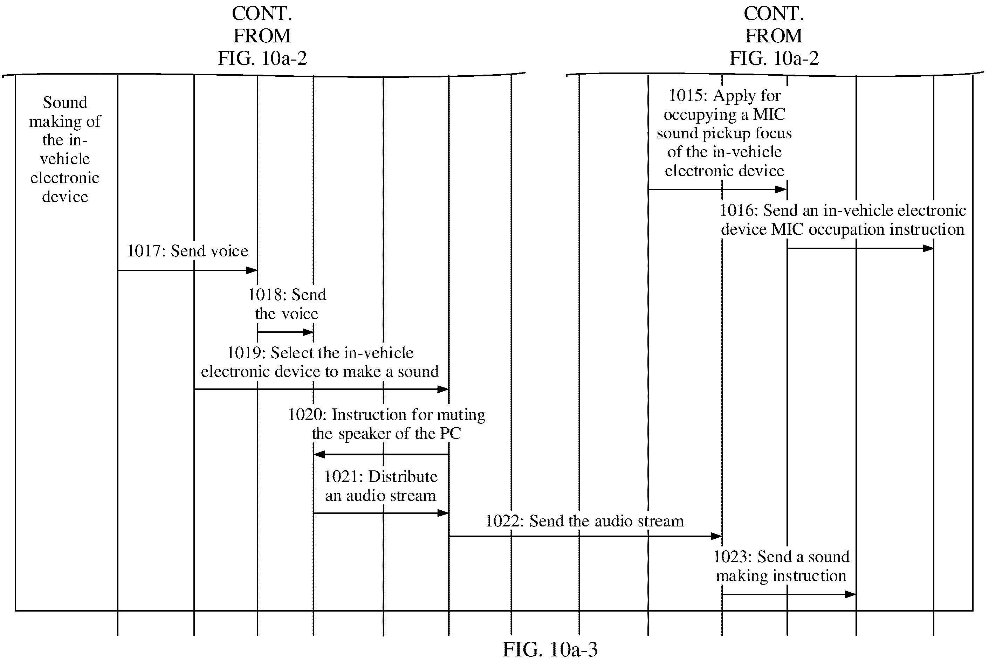

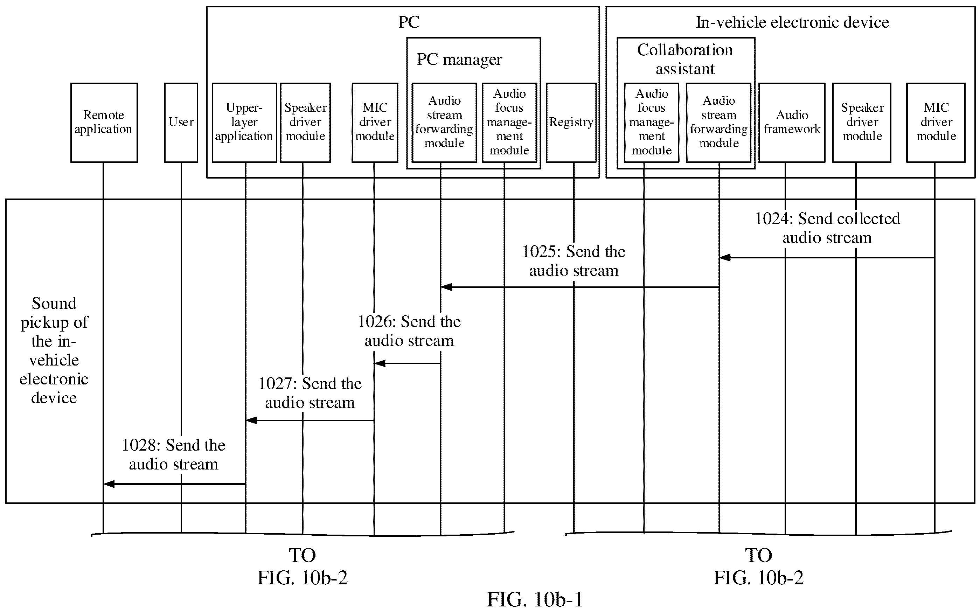

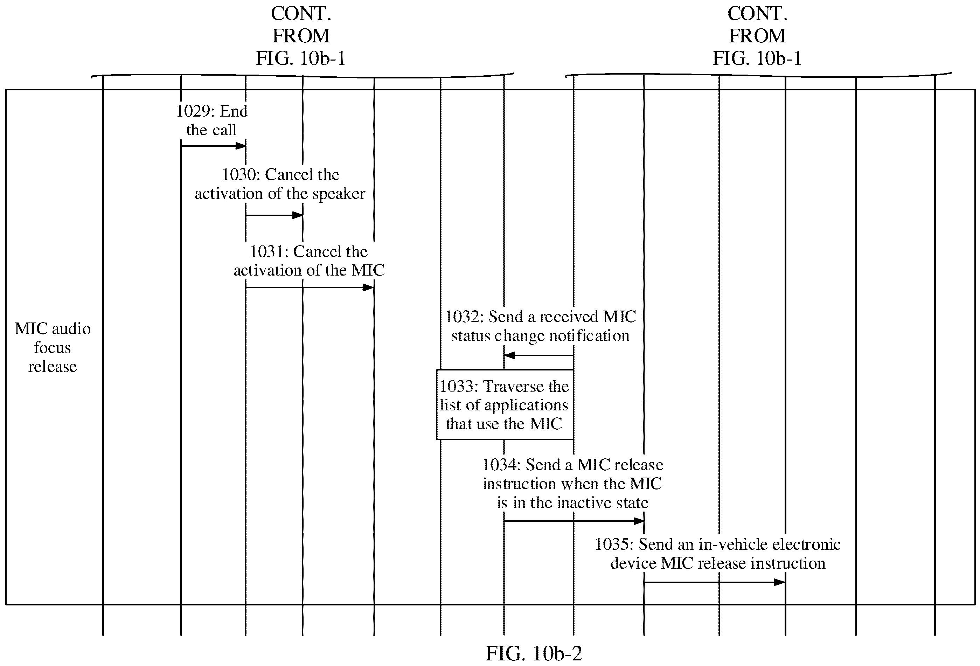

The following describes an audio control method according to an embodiment of this application in detail with reference to software structures of a PC and an in-vehicle electronic device. FIG. 10a-1 to FIG. 10b-2 are interaction diagrams of an audio control method according to an embodiment of this application. A difference from the audio control methods shown in FIG. 8 and FIG. 9 is that the audio control method may be performed by the modules in the PC and in the in-vehicle electronic device mentioned in FIG. 5, FIG. 6, and FIG. 7. The audio control method may include a phase of initialization of collaboration between a PC and an in-vehicle electronic device, a sound making phase of the in-vehicle electronic device, a sound pickup phase of the in-vehicle electronic device, and a MIC audio focus release phase. The following describes the four phases separately.

**First, the following describes a process in the phase of initialization of collaboration between the PC and the in-vehicle electronic device.** As shown in FIG. 10a-1 to FIG. 10a-3, the process in the initialization phase includes the following steps.

1001: A user starts a PC manager.

In some embodiments, after the PC manager is started, the PC manager may initiate a collaborative connection to the in-vehicle electronic device, and a collaboration assistant of the in-vehicle electronic device starts to run.

1002: A speaker driver module of the PC subscribes, toward an audio stream forwarding module of the PC manager, to an audio stream.

1003: An audio focus management module of the PC manager queries a registry for a registry MIC entry.

It can be understood that, for a manner in which the audio focus management module of the PC manager queries the registry for the registry MIC entry, reference may be made to step 804 in the embodiment shown in FIG. 8, and details are not described herein again.

1004: The registry returns an inactive state of a MIC to the audio focus management module of the PC manager.

1005: The audio focus management module of the PC manager sends a MIC release instruction to an audio focus management module of the collaboration assistant.

It can be understood that, if the MIC is in an active state, the audio focus management module of the PC manager may send a MIC activation instruction to the audio focus management module of the collaboration assistant, and after receiving the MIC activation instruction, the audio focus management module of the collaboration assistant starts to occupy a MIC of the in-vehicle electronic device to perform sound pickup, and sends audio stream data to the PC; or if the MIC is in the inactive state, the audio focus management module of the PC manager may send a MIC release instruction to the audio focus management module of the collaboration assistant, and after receiving the MIC release instruction, the audio focus management module of the collaboration assistant releases a MIC sound pickup focus of the in-vehicle electronic device occupied by the PC. For example, the in-vehicle electronic device may be controlled to stop sending audio stream data to the PC, and allow another application to occupy the MIC of the in-vehicle electronic device.

1006: The audio focus management module of the collaboration assistant sends the MIC release instruction to an audio framework.

1007: The audio focus management module of the PC manager subscribes, toward the registry, to a MIC status change notification.

It can be understood that, for a manner in which the audio focus management module of the PC manager subscribes to the MIC status change notification, reference may be made to step 801 in the embodiment shown in FIG. 8, and details are not described herein again.

In this embodiment of this application, an audio focus of the PC is managed by subscribing to the status of the MIC in the Windows registry, thereby resolving a problem of failure of a PC having a Windows operating system to manage an audio focus. In this way, occupation and release of the MIC sound pickup focus of the in-vehicle electronic device is implemented based on a change of the MIC entry in the registry, and the MIC sound pickup focus of the in-vehicle electronic device is occupied as needed.

**The following describes a process in which the in-vehicle electronic device performs sound making. As shown in** **FIG. 10a-1 to FIG. 10a-3****, the process in which the in-vehicle electronic device performs sound making includes the following steps.**

1008: A remote application initiates a call to an upper-layer application.

It can be understood that, the remote application may be an application that remotely in contact with the upper-layer application of the PC, for example, a call application, an audio application, or a video application. For example, a remote call application initiates a call to a call application of the PC. When a user selects to answer the call on a call application interface of the PC, the call application activates a speaker of the PC and a MIC of the PC, to play, by using the speaker of the PC, voice sent by the remote call application, and perform sound pickup by using the MIC of the PC.

1009: The user sends a user answering instruction to the upper-layer application.

1010: The upper-layer application activates the speaker of the PC.

1011: The upper-layer application activates the MIC of the PC.

1012: The registry sends a received MIC status change notification to the audio focus management module of the PC manager.

It can be understood that, when an application (for example, a call application) in the PC has activated the MIC, the MIC status recorded in the registry changes. Because the audio focus management module of the PC manager monitors the registry in real time, the audio focus management module of the PC manager can obtain the MIC status change notification.

1013: The audio focus management module of the PC manager traverses a list of applications that use the MIC.

It can be understood that, for a manner in which the audio focus management module of the PC manager traverses the list of applications that use the MIC, reference may be made to step 803 in the embodiment shown in FIG. 8, and details are not described herein again.

1014: When the MIC is in the active state, the audio focus management module of the PC manager sends a MIC occupation instruction to the audio focus management module of the collaboration assistant.

1015: The audio focus management module of the collaboration assistant applies to the audio framework for occupying the MIC sound pickup focus of the in-vehicle electronic device.

1016: The audio framework sends an in-vehicle electronic device MIC occupation instruction to a MIC driver module of the in-vehicle electronic device.

1017: The remote application sends voice to the upper-layer application.

1018: The upper-layer application sends the voice to the speaker driver module of the PC.

1019: The user selects the in-vehicle electronic device to make a sound.

In some embodiments, the user may select an option "In-vehicle electronic device for sound making" from a hands-free option on a screen of the PC, for example, a call application interface, to activate a speaker of the in-vehicle electronic device to make the sound.

1020: The audio stream forwarding module of the PC manager sends an instruction for muting the speaker of the PC to the speaker driver module of the PC.

In some embodiments, when the user selects the in-vehicle electronic device to make the sound, the audio stream forwarding module of the PC manager may mute the speaker of the PC, so that no echo is collected in a process in which the MIC of the in-vehicle electronic device collects an audio stream, thereby improving quality of the collected audio stream.

In some embodiments, the audio stream forwarding module of the PC manager may send a mute instruction to the speaker driver module of the PC, to mute the speaker of the PC.

1021: The speaker driver module of the PC distributes an audio stream to the audio stream management module of the PC manager.

In some embodiments, the audio stream forwarding module of the PC manager may serialize the audio stream into a sound byte stream, and then send the serialized audio stream to the audio stream forwarding module of the collaboration assistant via Wi-Fi or Bluetooth.

1022: The audio stream forwarding module of the PC manager sends the audio stream to the audio stream forwarding module of the collaboration assistant.

1023: The audio stream forwarding module of the collaboration assistant sends a sound making instruction to the speaker driver module of the in-vehicle electronic device.

It can be understood that, after receiving the sound making instruction, the speaker driver module of the in-vehicle electronic device may drive the speaker to make the sound.

**The following describes a process in which the in-vehicle electronic device performs sound pickup. As shown in** **FIG. 10b-1** **and** **FIG. 10b-2****, the process in which the in-vehicle electronic device performs sound pickup includes the following steps.**

1024: The MIC driver module of the in-vehicle electronic device sends collected audio stream to the audio stream forwarding module of the collaboration assistant.

1025: The audio stream forwarding module of the collaboration assistant sends the audio stream to the audio stream forwarding module of the PC manager.

In some embodiments, the audio stream forwarding module of the collaboration assistant performs serialization processing on the collected audio stream to obtain a sound byte stream, and then sends the sound byte stream after the serialization to the PC manager of the mobile terminal via Wi-Fi or Bluetooth.

1026: The audio stream forwarding module of the PC manager sends the audio stream to the MIC driver module of the PC.

In this embodiment of this application, after the PC manager receives the audio stream, the audio stream forwarding module of the PC manager may perform deserialization processing on the received collected audio stream, and then send the deserialized audio stream to the MIC driver module of the PC.

1027: The MIC driver module of the PC sends the audio stream to the upper-layer application.

1028: The upper-layer application of the PC sends the audio stream to the remote application.

**The following describes a MIC sound pickup focus release process. As shown in** **FIG. 10b-1** **and** **FIG. 10b-2****, the MIC sound pickup focus release process includes the following steps.**

1029: The user ends the call.

It can be understood that, after the call of the PC ends, the MIC entry in the registry of the PC changes, and the PC manager receives a notification, so that the audio focus management module of the PC manager may learn that the MIC is currently in the inactive state and then send a MIC release instruction to the in-vehicle electronic device. After the collaboration assistant receives the MIC release instruction, the MIC sound pickup focus of the in-vehicle electronic device is released.

1030: The upper-layer application cancels the activation of the speaker of the PC.

1031: The upper-layer application cancels the activation of the MIC of the PC.

1032: The registry sends a received MIC status change notification to the audio focus management module of the PC manager.

1033: The audio focus management module of the PC manager traverses the list of applications that use the MIC.

It can be understood that, for a manner in which the audio focus management module of the PC manager traverses the list of applications that use the MIC, reference may be made to step 803 in the embodiment shown in FIG. 8, and details are not described herein again.

1034: When the MIC is in the inactive state, the audio focus management module of the PC manager sends a MIC release instruction to the audio focus management module of the collaboration assistant.

1035: The audio focus management module of the collaboration assistant sends an in-vehicle electronic device MIC release instruction to the audio framework.

In this embodiment of this application, upon receipt of the MIC release instruction, the collaboration assistant of the in-vehicle electronic device may release the MIC sound pickup focus. In this case, the PC stops occupying the MIC of the in-vehicle electronic device. For example, the in-vehicle electronic device stops sending audio stream data to the PC, and the in-vehicle electronic device allows another application of the in-vehicle electronic device or another application collaborating with the in-vehicle electronic device to occupy the MIC.

In this embodiment of this application, without any modification, the application in the PC may enable the in-vehicle electronic device to perform collaborative sound making and sound pickup, thereby implementing an end-to-end effect of sound making and sound pickup for the collaboration between the PC and the in-vehicle electronic device. After the call of the PC exits, an application of the in-vehicle electronic device can use the MIC of the in-vehicle electronic device; and when the PC call is in progress, sound pickup is performed by using the MIC of the in-vehicle electronic device, thereby solving a problem of persistent occupation of the MIC audio focus of the in-vehicle electronic device.

In conclusion, in this embodiment of this application, the current status of the MIC of the PC is monitored in real time, so that the status of occupation of the MIC of the in-vehicle electronic device is controlled in real time based on the current status of the MIC of the PC, thereby avoiding the following problem: An application of the PC occupies the MIC of the in-vehicle electronic device for a long time during collaboration between the PC and the in-vehicle electronic device, affecting use of the MIC by an application of the in-vehicle electronic device. This ensures that an application of the in-vehicle electronic device can use the MIC of the in-vehicle electronic device when the application of the PC does not need to use the MIC of the in-vehicle electronic device.

In the accompanying drawings, some structural or method features may be shown in a particular arrangement and/or order. However, it should be understood that such a particular arrangement and/or order may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by using a combination of a plurality of physical units/modules. Physical implementations of these logical units/modules are not the most important, and a combination of functions implemented by these logical units/modules is a key to resolving the technical problem mentioned in this application. In addition, to highlight an innovative part of this application, a unit/module that is not closely related to resolving the technical problem mentioned in this application is not introduced in the foregoing device embodiments of this application. This does not mean that there are no other units/modules in the foregoing device embodiments.

It should be noted that, in the examples and specification of this patent, relational terms such as first and second are merely intended to distinguish one entity or operation from another, and do not necessarily require or imply any such actual relationship or order between these entities or operations. In addition, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in a process, method, article, or device which includes the element.

Although this application has been illustrated and described with reference to some preferred embodiments of this application, a person of ordinary skill in the art should understand that various changes may be made to this application in terms of form and details without departing from the scope of this application.

## Claims

1. An audio control method, wherein the method comprises:
a first sound pickup unit of a first electronic device being in an active state, collecting, by the first electronic device, audio data by using a second sound pickup unit of a second electronic device; and
detecting, by the first electronic device, that the first sound pickup unit has changed from the active state to an inactive state, and stopping, by the first electronic device, collecting audio data by using the second sound pickup unit of the second electronic device.

2. The audio control method according to claim 1, wherein detecting, by the first electronic device, that the first sound pickup unit has changed from the active state to the inactive state comprises:
receiving, by the first electronic device, a status change notification of the first sound pickup unit;
determining, by the first electronic device, whether there is an application that is using the first sound pickup unit; and
when determining that there is no application that is using the first sound pickup unit, determining, by the first electronic device, that the first sound pickup unit has changed from the active state to the inactive state.

3. The audio control method according to claim 2, wherein determining, by the first electronic device, whether there is an application that is using the first sound pickup unit comprises:
obtaining, by the first electronic device, a list of applications that have registered to use the first sound pickup unit; and
determining, by the first electronic device, whether there is an application that is using the first sound pickup unit in the application list.

4. The audio control method according to any one of claims 1 to 3, wherein stopping, by the first electronic device, collecting audio data by using the second sound pickup unit of the second electronic device comprises:
sending, by the first electronic device, a sound pickup unit release instruction to the second electronic device; and
stopping, by the second sound pickup unit based on the sound pickup unit release instruction, collecting audio data.

5. The audio control method according to any one of claims 1 to 4, wherein the method further comprises:
detecting, by the first electronic device, that the first sound pickup unit has changed from the inactive state to the active state, and collecting, by the first electronic device, audio data by using the second sound pickup unit of the second electronic device.

6. The audio control method according to claim 5, wherein collecting, by the first electronic device, audio data by using the second sound pickup unit of the second electronic device comprises:
sending, by the first electronic device, a sound pickup unit occupation instruction to the second electronic device; and
collecting, by the second sound pickup unit, audio data based on the sound pickup unit occupation instruction.

7. The audio control method according to any one of claims 1 to 6, wherein the method further comprises:
detecting, by the first electronic device, a user's instruction for selecting a second playing unit of the second electronic device to play audio data, and muting a first playing unit of the first electronic device; and
playing, by the first electronic device, audio data by using the second playing unit.

8. The audio control method according to any one of claims 1 to 7, wherein the method further comprises:
after a first application of the first electronic device is started, obtaining, by the first application, an initial status of the first sound pickup unit; and
detecting, by the first application, that the initial status is the inactive state, and stopping, by the first electronic device, collecting audio data by using the second sound pickup unit of the second electronic device.

9. The audio control method according to any one of claims 1 to 8, wherein an operating system of the first electronic device is a Windows operating system.

10. The audio control method according to any one of claims 1 to 9, wherein the second electronic device is an in-vehicle electronic device.

11. An electronic device, comprising: a memory, configured to store instructions to be executed by one or more processors of the electronic device; and the processor, which is one of the one or more processors of the electronic device, configured to perform the audio control method according to any one of claims 1 to 10.

12. A readable medium, wherein instructions are stored on the readable medium; and when the instructions are executed on an electronic device, the electronic device is caused to perform the audio control method according to any one of claims 1 to 10.
